# EUROPEAN PATENT APPLICATION

(11) **EP 1 736 430 A2**
(43) Date of publication of application: **27.12.2006**
(21) Application number: 06115393.8
(22) Date of filing: 13.06.2006
(51) Int. Cl.: B65H 75/36, B65H 75/42, H02G 11/02

(54) **Cable winding device for electrical appliances**

(30) Priority: 22.06.2005 IT GE20050043
(71) Applicant: Ariete S.p.A., 59100 Prato (IT)
(72) Inventor: Rosa, Carlo, 23900, Lecco (IT); Picchi, Michele, 56020, La Rotta, Province of Pisa (IT); Curreli, Francesco, 59100, Prato (IT)
(74) Representative: Porsia, Attilio

(57) **Abstract**

Cable winding device for electrical appliances, comprising a main body (1) and an electric power supply cable (5), characterized in that it comprises a compartment (4, 6) arranged on the bottom of said main body (1) and a cable winding base (2, 12) able to engage in an easily accessible manner, via suitable connection means (603, 204, 304, 404, 503; 8, 13; 17), with said compartment (4, 6), said base being provided with shaped parts (3s, 3d; 13', 14) so as to allow a user to wind up and unwind said cable (5) around them, so that they may be extracted and/or concealingly inserted inside said compartment (4, 6).

## Description

The present invention relates to a cable winding device for electrical appliances.

As is known, any electrical appliance, for example a portable or tabletop electrical appliance, such as a steam cleaner, a food processor or the like, comprises a main body which may be gripped, if necessary using suitable gripping parts, or placed on a table top for use, and an electric power supply cable equipped with a plug for insertion in a suitable power socket. One of the main drawbacks associated with these electrical appliances is that, after use, the power supply cable, which among other things is normally quite long, does not have a suitable seat in the appliance where it can be stowed away, so as to prevent it, for example, from getting tangled and so that the appliance may be used more easily and rapidly by the user.

Known electric household appliances incorporate automatic cable winding devices with a spring for recalling the power cable. However, the use of these automatic cable winding devices is limited solely to large-size appliances, such as vacuum cleaners and the like, it not being possible to incorporate them in small electric household appliances both because of their size and because of their cost.

The object of the present invention is therefore to provide a cable winding device which may be provided on any portable or tabletop electrical appliance in a simple, efficient and low cost manner.

This object is achieved in accordance with the present invention by means of a cable winding device for electrical appliances, comprising a main body and an electric power supply cable, characterized in that it comprises a cylindrical compartment arranged on the bottom of said main body and a cable winding base able to engage in an easily accessible manner, via suitable connection means, with said cylindrical compartment, said base being provided with shaped parts so as to allow a user to wind up and unwind said cable around them, so that they may be extracted and/or concealingly inserted inside said cylindrical compartment.

In accordance with an embodiment of the present invention, this base is engaged in an easily releasable manner with a complementary receiving part of the main body of the electrical appliance.

In accordance with a further embodiment of the present invention, this base is mounted in a telescopically slidable manner on a complementary part of the main body of the electrical appliance, so as to be able to be extracted partially from said body.

According to a further variant of the present invention, this base is hinged on said complementary receiving part of the main body of the electrical appliance, so as to be able to be pivoted into an open position for winding up and/or unwinding the cable onto/from said tubular element.

Further characteristic features and advantages of the present invention will be understood more clearly from the following description, considered by way of a non-limiting example with reference to the accompanying drawings in which:
- Fig. 1 shows a partial perspective view from below of a portion of the body of an electrical appliance provided with a cylindrical compartment of a cable winding device according to a first embodiment of the present invention;
- Fig. 2 shows a perspective view, from above, of a cable winding base able to engage with the cylindrical compartment in the body of the electrical appliance shown in Figure 1;
- Fig. 3 shows a side elevation and cross-sectional view of said cylindrical compartment and the cable winding base according to the embodiment shown in Figures 1 and 2, before engagement together;
- Fig. 4 shows a further side elevation and cross-sectional view similar to that of Figure 3, with the cable winding base engaged with said cylindrical compartment and with, wound around it, a power supply cable of the appliance;
- Fig. 5 shows a second embodiment of the device according to the invention, where the base is mounted in a telescopically slidable manner on a complementary receiving part of the main body of the electrical appliance, in the position with the cable wound around it;
- Fig. 6 is a view, similar to that of Figure 5, showing the base slid outside of its storage seat inside the body of the appliance, for winding and/or unwinding of the cable onto/from it;
- Fig. 7 shows a further embodiment of the device according to the invention with the base hinged on said complementary receiving part of the main body of the electrical appliance, in the closed position, and;
- Fig. 8 is a view, similar to that of Figure 7, showing the base which has been pivoted into the open position for winding up and/or unwinding the cable onto/from said tubular part.

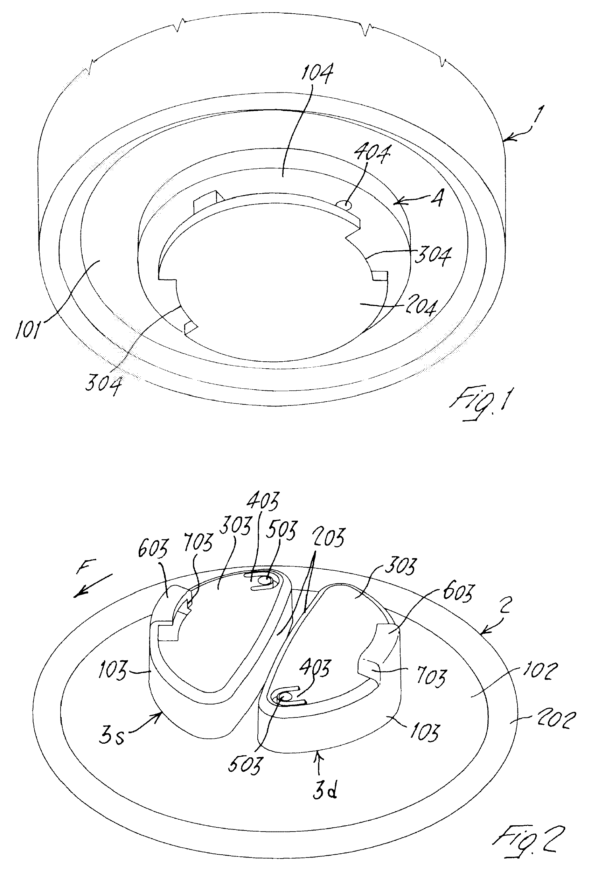

With reference to the accompanying drawings and with particular reference first of all to the embodiment in Figures 1 to 4, 1 denotes the main body of any electrical appliance, for example a portable or tabletop electrical appliance, such as for example a steam cleaner, a food processor or the like, having at the bottom an annular seat 101 in the centre of which a cylindrical compartment 4 is formed, the bottom wall 104 of said compartment having integrally connected thereto a circular head 204 in which two diametrically opposite recesses 304 are formed. Two substantially hemispherical cavities 404 are also formed in this bottom wall 104 of this cylindrical compartment 4, only one of them being visible in the figures.

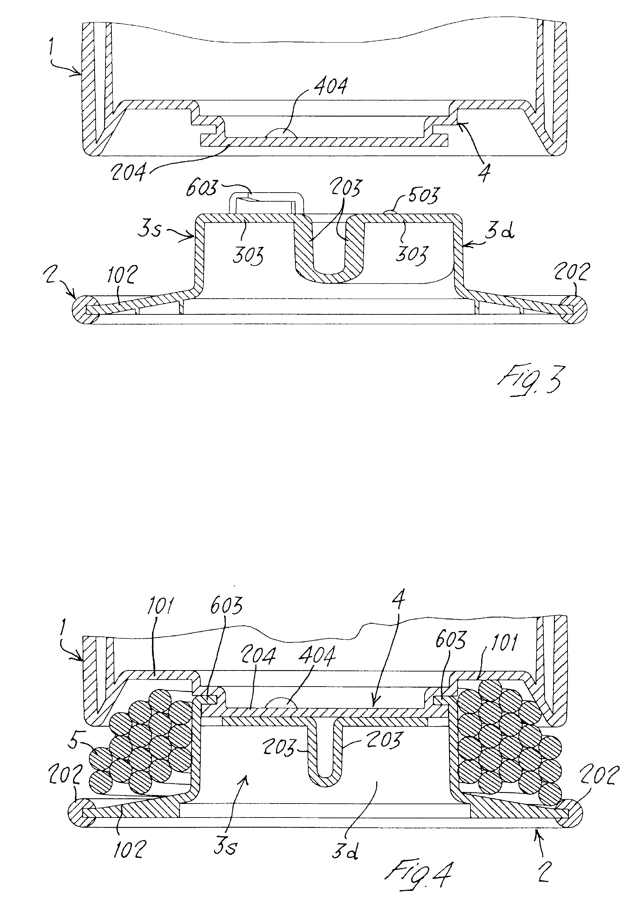

Fig. 2 shows a cable winding base 2 which is substantially circular and comprises a disc 102 provided with a toroidal edge 202. Two internally blocks 3s and 3d extend upwards centrally from the said disc 102. These blocks 3s and 3d comprise a first side wall 103 which is substantially semi-cylindrical and a second side wall 203 which is substantially flat and these substantially flat walls 203 face each other and are slightly spaced from one another. Each of these blocks 3s and 3d is provided with an upper wall 303 having formed therein, at one of the two rounded corners defined between said first side wall 103 and said second side wall 203, a tongue 403 which is deformable elastically and provided at the free end with a substantially hemispherical pin 503. This substantially hemispherical pin 503 is able to engage in one of said cavities 404 formed in the bottom wall 104 of said cylindrical compartment 4. A substantially L-shaped tooth 603, which is open on one side and has a side wall 703 on the opposite side, is formed in the central zone of the edge of this first side wall 103 of each of said blocks 3s and 3d. This tooth 603 is able to enter into one of the recesses 304 of the circular head 204 and slide along the surface of said circular head 204 until its side wall 703 comes up against the edge of said recess 304.

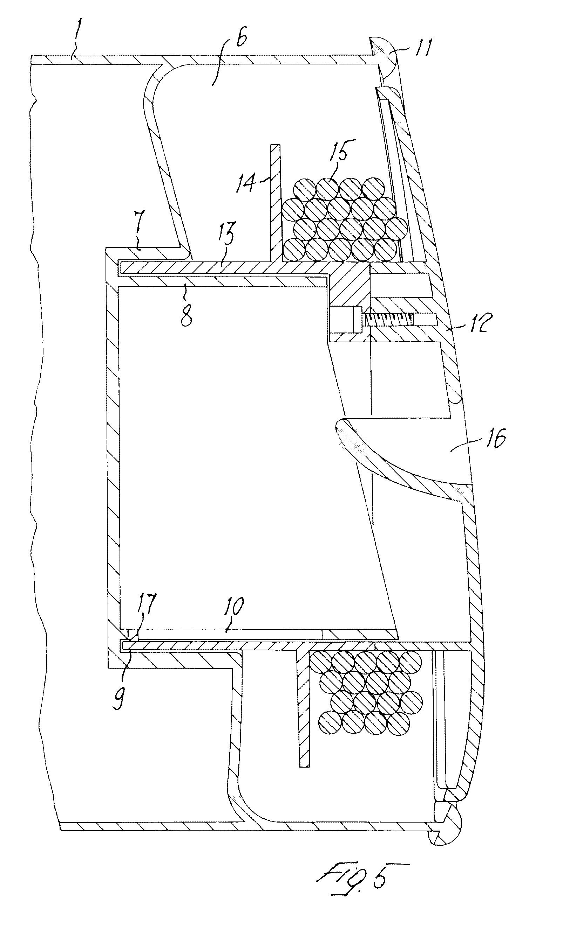

Fig. 3 shows the cable winding base 2 provided with the two blocks 3s and 3d which, as mentioned above, are internally hollow so as to allow a user to insert his/her fingers therein and grip said base. It is possible to note, moreover, one of the two substantially hemispherical pins 503 raised with respect to the upper wall 303 of the block 3d on which it is formed.

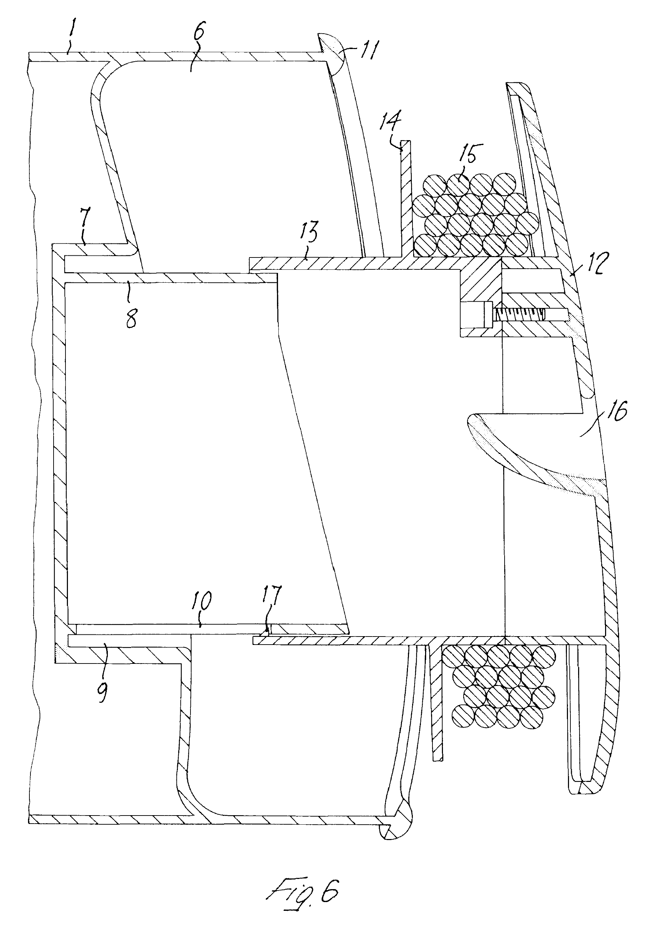

Considering also Fig. 4 of the accompanying drawings, which shows a power supply cable 5 of any portable or tabletop electrical appliance, for example an appliance for processing and preparing food, a steam cleaner, or the like, operation of the present cable winding device will be described. With reference to Figs. 1 and 2, let us imagine that the main body 1 of the appliance is arranged above the cable winding base 2, or vice versa, so that the two recesses 304 of the head 204 of the cylindrical compartment 4 are positioned exactly above the two teeth 603 formed on the upper wall 303 of the two blocks 3s and 3d of the cable winding base 2. In this situation the two tongues 403 with the substantially hemispherical pins 503 will be bent slightly downwards. With a rotation of the cable winding base 2 in the direction of the arrow F, the upper surfaces of these teeth 603 will slide on the surface of said head 204 until their side wall 703 comes up against the edge of the associated recess 304. Having completed in this way rotation in the direction of the arrow F, the substantially hemispherical pins 503 formed on top of the two tongues 403 will be situated exactly opposite the cavities 404 provided in the bottom wall 104 of the cylindrical compartment 4; therefore, these tongues 403 will return elastically upwards into their original rest position and said pins 503 will snap-engage inside said cavities. At this point, a user who has stopped using the electric household appliance equipped with the present device disconnects the power supply cable 5 from the associated power socket and winds it around the blocks 3s and 3d of the cable winding base 2 (see Fig. 4), the present invention advantageously being provided with the annular seat 101 for receiving said cable 5 formed underneath the main body 1 of the appliance and the cable winding base 2 provided with the toroidal edge 202 which helps keep in position the cable 5 wound inside the present cable winding device. Advantageously, this cable winding base 2 may also perform the basic function of a support for resting the electrical appliance equipped with the present cable winding device on any work surface. The power supply cable 5 may also be provided with a cable fixing element for preventing any unwanted unwinding thereof once it has been wound around the cable winding base 2 and the cylindrical compartment 4.

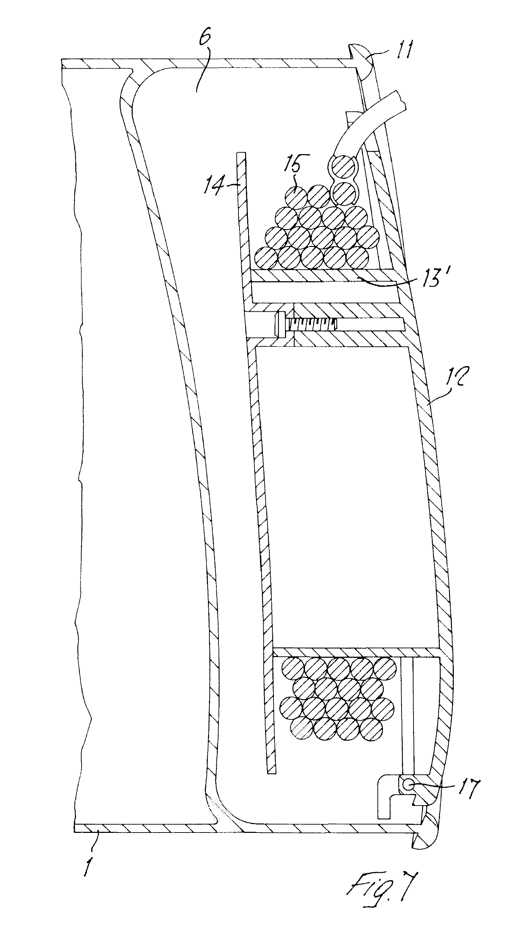

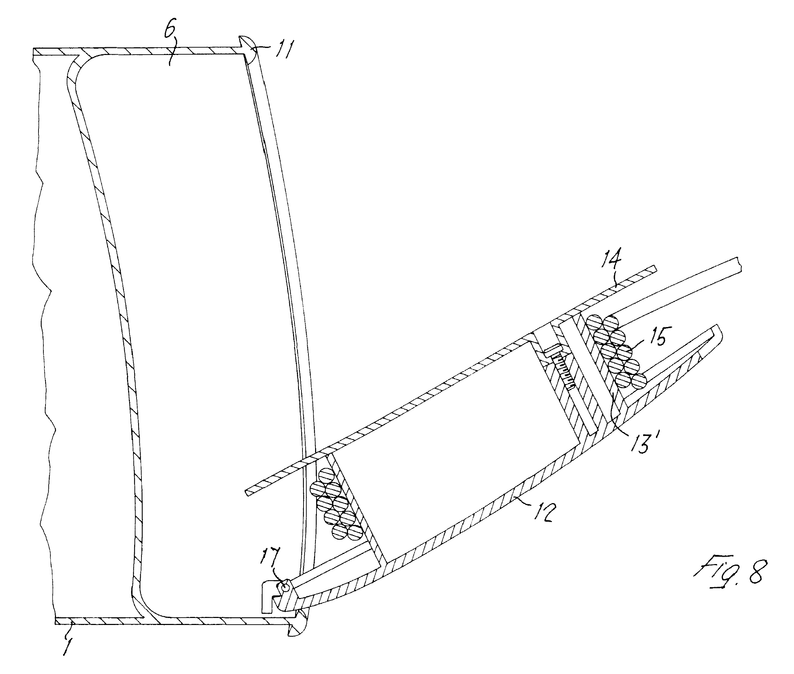

Figures 5 and 6 show a second embodiment of the device according to the invention.

In accordance with this embodiment, the bottom of the appliance 1 is provided with a storage compartment 6 having in the centre a cylindrical compartment 7 from the bottom of which a hollow cylindrical element 8 with a diameter slightly smaller than the diameter of the compartment 7 extends concentrically up to a small distance from the edge 11 of the compartment 6, so that a gap 9 is left between the outer cylindrical sleeve of this element 8 and the inner cylindrical sleeve of the compartment 7, for the purposes which will be described below. Moreover, the cylindrical sleeve 8 has a recess 10 which extends from the bottom of this sleeve upwards over most of its length along a directrix thereof, for the purposes which will be described below.

12 denotes a part for closing the compartment 6. A cylindrical element 13 extends from the inner side of the part 12 and has an internal diameter substantially equal to the external diameter of the element 8, so that said element 13 may be made to slide telescopically on the element 8.

The element 13 has, in the region of recess 10, a contact tooth 17 which has the function of limiting the travel of said element with respect to the element 8.

The cylindrical element 13 has, at a certain distance from the part 12, extending radially outwards from it, an annular wall 14 which defines, in combination with the inner side of the part 12, a compartment inside which the power cable 15 may be wound up.

The closing piece 12 is provided centrally with an opening 16 for facilitating operation thereof.

The operating principle of the embodiment described above will be obvious. If it required to wind up (or unwind) the cable 15, a pulling force is exerted on the end piece 12 so as to cause the cylindrical element 13 to slide telescopically on the element 8, so that the compartment for receiving the cable 15 is pulled outwards into the position shown in Figure 6. At this point it is possible to unwind (or wind up) the cable 15 from/onto its support.

The cylindrical elements 8 and 13 may have, equally well, a circular, triangular or other shape in plan view.

With reference to Figures 7 and 8, a further embodiment of the device according to the invention will now be described.

According to this embodiment, the compartment 6 is without the cylindrical element 8 and, likewise, the cover piece 12 does not have that part of the cylindrical element 13 which cooperates telescopically with the element 8, this being reduced to that element 13' forming the bottom of the compartment for storing the cable 15. The radial element 14 therefore extends over the whole length of the cover piece 12.

The cover piece 12 is hinged at 17 with the edge of the compartment 6. The operating principle of the embodiment described will be obvious.

In order to wind up or unwind the cable 15, the cover 12 is pivoted outwards, causing it to rotate about the hinge 17, as shown in Figure 8.

Obviously, the present invention is not limited to the embodiments shown and described, but comprises all those variants and modifications falling within the wider scope of the inventive idea, substantially as claimed below.

## Claims

1. Cable winding device for electrical appliances, comprising a main body (1) and an electric power supply cable (5), **characterized in that** it comprises a compartment (4, 6) arranged on the bottom of said main body (1) and a cable winding base (2, 12) able to engage in an easily accessible manner, via suitable connection means (603, 204, 304, 404, 503; 8, 13; 17), with said cylindrical compartment (4), said base being provided with shaped parts (3s, 3d; 13', 14) so as to allow a user to wind up and unwind said cable (5) around them, so that they may be extracted and/or concealingly inserted inside said compartment (4, 6).

2. Device according to Claim 1, **characterized in that** said cable winding base (2) comprises a disc (102) from the centre of which said parts (3s, 3d) able to engage with said compartment (4) extend upwards.

3. Device according to Claim 2, **characterized in that** said disc (102) is provided with a toroidal edge (202).

4. Device according to Claim 1, **characterized in that** said parts (3s, 3d) comprise two blocks with a substantially semi-cylindrical shape, each having a first substantially cylindrical side wall (103) and a second substantially flat side wall (203), the substantially flat side wall (203) of one of said blocks (3s, 3d) facing towards the said substantially flat side wall (203) of the other block (3d, 3s) and situated at a suitable distance therefrom.

5. Device according to Claim 1, **characterized in that** an annular seat (101) is provided on the bottom of said main body (1) around said compartment (4).

6. Device according to Claim 4, **characterized in that** said blocks (3s, 3d) are internally hollow.

7. Device according to Claim 4, **characterized in that** each of said blocks (3s, 3d) comprises an upper wall (303) on which at least one tooth (603) is formed and said compartment (4) comprises at the bottom a circular head (204) inside which at least one pair of diametrically opposite recesses (304) are formed, each of said teeth (603) being able to engage, by means of a rotating movement of said main body (1) or said cable winding base (2), inside one of said recesses (304).

8. Device according to Claim 4, **characterized in that** each of said teeth (603) is open on one side and comprises on the other side a lateral contact wall (703).

9. Device according to Claim 1, **characterized in that** each of said blocks (3s, 3d) comprises, on a corner defined between the substantially flat side wall (203) and the substantially cylindrical side wall (103), a tongue (403) which is deformable elastically and has at its free end a substantially hemispherical pin (503).

10. Device according to Claim 9, **characterized in that** said compartment (4) comprises a bottom wall (104) which has, formed therein, substantially hemispherical cavities (404) inside each of which said substantially hemispherical pin (503) of said tongue (403) snap engages.

11. Device according to Claim 1, **characterized in that** said cable winding base (12) is mounted in a telescopically slidable manner on a complementary element (8) which extends from the bottom of the receiving compartment (6) formed in the main body (1) of the electrical appliance, so as to be able to be extracted partially from said compartment.

12. Device according to Claim 11, **characterized in that** the said storage compartment (6) has centrally a compartment (7) from the bottom of which a hollow element (8) with dimensions slightly smaller than those of the compartment extends concentrically up to a small distance from the edge (11) of the compartment (6), so that a gap (9) is left between the outer sleeve of this element (8) and the inner sleeve of the compartment (7), the sleeve of the element (8) being provided with a recess (10) which extends from the bottom of this sleeve upwards over most of its length along a directrix thereof, while an element (13), the inner dimension of which is substantially equal to the outer dimension of the element (8), extends from the closing piece (12), so that said element (13) may be slid telescopically on the element (8).

13. Device according to Claim 12, **characterized in that** the element (13) has, in the region of the said recess (10), a tooth (17) which has the function of limiting the travel of said element with respect to the element (8).

14. Device according to Claims 11 to 13, **characterized in that** the element (13) has, in the region of the said recess (10) of the element (8), a tooth (17) which has the function of limiting the travel of said element with respect to the element (8).

15. Device according to any one of the preceding Claims 11 to 14, **characterized in that** the element (13) has, at a certain distance from the part (12), extending radially outwards, an annular wall (14) which defines in combination with the inner side of the part (12) a compartment inside which the electric cable (15) may be wound.

16. Device according to any one of the preceding Claims 11 to 15, **characterized in that** the closing piece (12) is provided centrally with an opening (16) for facilitating operation thereof.

17. Device according to Claim 1, **characterized in that** said cover piece (12) is hinged on the edge (11) of the compartment (6) and an element (13') extends between said cover (12) and a wall element (14) parallel thereto so as to define between the inner side of the cover (12), the inner side of the wall (14) and the inner side of the element (13') a compartment for winding up the cable (15).

18. Device according to any one of the preceding claims, in which said hollow parts (8), (13) and (13') may have a circular or triangular or also any other shape in plan view.
